# EUROPÄISCHE PATENTSCHRIFT

(11) **EP 2 065 635 B1**
(45) Veröffentlichungstag und Bekanntmachung des Hinweises auf die Patenterteilung: **12.10.2011**
(21) Anmeldenummer: 08019600.9
(22) Anmeldetag: 10.11.2008
(51) Int. Cl.: F21S 8/10, F21S 8/12, G02B 6/00

(54) **Beleuchtungsvorrichtung für Fahrzeuge**
Illumination device for vehicles
Dispositif d'éclairage pour véhicules

(30) Priorität: 27.11.2007 DE 102007057399
(43) Veröffentlichungstag der Anmeldung: 03.06.2009
(73) Patentinhaber: Hella KGaA Hueck & Co., 59552 Lippstadt (DE)
(72) Erfinder: Mügge, Martin, 59590 Geseke (DE)
(74) Vertreter: Ostermann, Thomas

(56) Entgegenhaltungen:
- DE-A1- 19 939 087
- DE-A1-102004 048 669
- JP-A- 2004 111 352
- US-A1- 2003 086 276
- US-A1- 2004 130 903

## Beschreibung

Die Erfindung betrifft eine Beleuchtungsvorrichtung für Fahrzeuge nach dem Oberbegriff des Patenanspruchs 1.

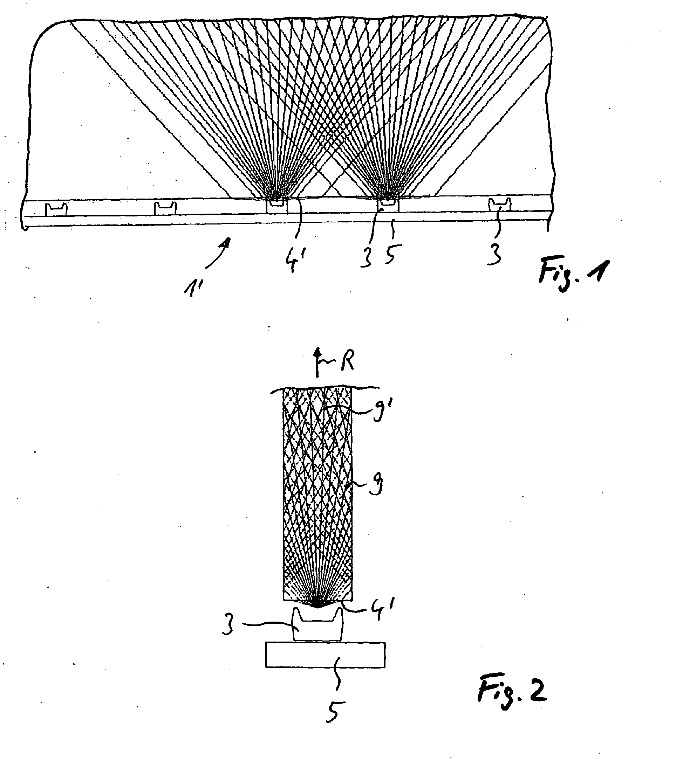

Aus der DE 10 2005 018 212 A1 ist eine Beleuchtungsvorrichtung für Fahrzeuge bekannt, die einen flächigen Lichtleitkörper und eine Mehrzahl von reihenförmig an einer Schmalseite des flächigen Lichtleitkörpers angeordnete Leuchtelemente aufweist. Der Lichtleitkörper weist gegenüberliegende Flachseiten auf, wobei eine Flachseite derart strukturiert angeordnet ist, dass der Lichtleitkörper eine relativ homogene große Lichtfläche ("Lichtvorhang") bereitstellt. Die Leuchtelemente sind in einer gemeinsamen Ebene und in einem konstanten Abstand zu einer Schmalseite des flächigen Lichtleitkörpers angeordnet. Dadurch, dass die Leuchtelemente in einem Abstand zueinander angeordnet sind, entsteht im Bereich der Schmalseite zwischen den Leuchtelementen eine im Längsschnitt des Lichtleitkörpers dreieckige Lichteinkoppelzone mit einer verringerten Leuchtdichte. Wenn sich eine Lichtauskoppelseite des flächigen Lichtleitkörpers nicht - wie bei der Ausführung gemäß DE 10 2005 018 212 A1 - an einer Flachseite befindet, sondern an einer zu der Lichteinkoppelseite gegenüberliegenden Schmalseite des Lichtleitkörpers, müssen die abgedunkelten Bereiche der Schmalseite mittels einer vorgelagerten Blende abgedeckt sein, um ein homogenes Erscheinungsbild der Ausleuchtung zu erzielen. In den Figuren 1 und 2 ist der Strahlenverlauf im Bereich einer Lichteinkoppelseite eines flächigen Lichtleitkörpers nach einer bekannten Ausführung der Beleuchtungsvorrichtung dargestellt.

Aus der US 2003/0086276 A1 ist eine Beleuchtungsvorrichtung mit einem flächigen Lichtleitkörper bekannt. Der flächige Lichtleitkörper weist gegenüberliegende Flachseiten auf, an denen das eingekoppelte Licht totalreflektiert und an einer Lichtauskoppelseite ausgekoppelt wird. Auf einer der Lichtauskoppelseite gegenüberliegenden Seite ist eine Lichteinkoppelseite angeordnet, die jeweils Leuchtelementen zugeordnete parabelförmige Einbuchtungen aufweist.

Aufgabe der vorliegenden Erfindung ist es, eine Beleuchtungsvorrichtung für Fahrzeuge derart weiterzubilden, dass eine Verbesserung der Lichteinkoppelung in einen flächigen Lichtleitkörper ermöglicht wird.

Zur Lösung dieser Aufgabe weist die Erfindung die Merkmale des Patentanspruchs 1 auf.

Ein Vorteil der Erfindung besteht darin, dass eine unebene Ausgestaltung einer Schmalseite des flächigen Lichtleitkörpers auf einer Lichteinkoppelseite zumindest im Bereich einer Lichteinkoppelstelle eine verbesserte Ausnutzung des von den Leuchtelementen ausgesandten Lichtes sowie eine Anpassung an die die Beleuchtungsvorrichtung umgebenden konstruktiven Randbedingungen ermöglicht wird. Vorteilhaft kann insbesondere die Effizienz hinsichtlich der Lichtführung und der Ausleuchtung des flächigen Lichtleitkörpers verbessert werden. Nach der Erfindung ist an dem Lichteinkoppelabschnitt ein ellipsoidförmiges Lichteinkoppelelement angeformt, das senkrecht von der Erstreckungsebene der Schmalseite abragt. Hierdurch kann eine relativ konzentrierte Einstreuung des Lichtes in die Schmalseite des Lichtleitkörpers erfolgen.

Nach einer Weiterbildung der Erfindung weist eine an der Lichteinkoppelseite angeordnete Schmalseite des Lichtleitkörpers in einem Lichteinkoppelabschnitt eine Ausnehmung mit einer frei geformten Einkoppelfläche oder eine zylinderförmige Ausnehmung auf. Vorteilhaft ermöglicht die erfindungsgemäße Ausbildung der Lichteinkoppelabschnitte einen neutralen Lichteintritt, so dass auch die relativ flachen, in einem kleinen Winkel zu der Erstreckungsebene der Schmalseite eintretenden Lichtstrahlen kaum eine Richtungsänderung beim Einkoppeln erfahren. Vorteilhaft kann hierdurch eine Blende zur Abdeckung des zwischen den Einkoppelabschnitten gelegenen Zwischenabschnitts, in der eine geringere Leuchtdichte vorliegt, kleiner ausgebildet sein bzw. bei gleich großer Blende der Abstand benachbarter Leuchtelemente größer gewählt sein.

Nach einer Weiterbildung der Erfindung weist die Schmalseite auf der Lichteinkoppelseite zumindest im Lichteinkoppelabschnitt mindestens zwei zylinderförmige Ausbuchtungen auf, die sich jeweils in Längserstreckung der Schmalseite erstrecken. Auf einer zueinander gekehrten Seite laufen die zylinderförmigen Ausbuchtungen zu einer eine Vertiefung bildenden Senkgeraden zusammen. Vorteilhaft kann hierdurch ein in axialer Richtung ausgesandtes Lichtanteil an dem Lichteinkoppelabschnitt zu den Flachseiten hin gebrochen werden, ohne dass dieser Lichtanteil an einer gegenüberliegenden Seite des Lichteinkoppelabschnitts des Lichtleitkörpers ohne Reflexion austreten kann. Vorteilhaft kann somit der Lichtverlauf bzw. die Lichtführung in dem Lichtleitkörper verbessert werden, ohne dass der axiale Lichtanteil ungenutzt durch den Lichtleitkörper strahlt.

Nach einer Weiterbildung der Erfindung sind zwischen dem Lichteinkoppelabschnitt in der Schmalseite Zwischenabschnitte vorgesehen, die eben oder stufenförmig oder mit parabelförmigen Einbuchtungen versehen ausgebildet sind.

Nach einer ersten Ausbildung mit ebenen Zwischenabschnitten weisen die Lichtleitkörper lediglich in den Lichteinkoppelabschnitten optische Flächen auf, die das Licht unter Totalreflexion innerhalb des Lichtleitkörpers leiten.

Bei einer Ausführungsform mit parabelförmigen Einbuchtungen der Zwischenabschnitte wird eine stärkere Ausrichtung des eingekoppelten Lichtes in einem sich zum Lichteinkoppelabschnitt verlängernden Bereich des Lichtleitkörpers ermöglicht. Hierbei wird ein relativ konvergentes Lichtband in einer Ebene parallel zu den Flachseiten und in Verlängerung zu einem Bereich des Lichteinkoppelabschnittes erzeugt. Insbesondere kann hierdurch die Ausleuchtung der Flachseiten des Lichtleitkörpers beeinflusst werden, wobei Bereiche der Flachseiten eine punktuell höhere Leuchtdichte aufweisen als eine den Lichtleitkörper durchsetzende Grundleuchtdichte.

Eine Ausführung mit stufenförmigen Einbuchtungen ermöglicht eine bogenförmige Anordnung einer der Lichteinkoppelseite zugewandten Schmalseite des Lichtleitkörpers. Vorteilhaft kann somit der gesamte Lichtleitkörper als bogenförmige Platte ausgebildet sein.

Nach einer Weiterbildung der Erfindung kann in dem Lichteinkoppelabschnitt des Lichtleitkörpers zum einen ein sich in Lichtführungsrichtung verjüngendes Lichteinkoppelelement angeordnet sein, das sich im Wesentlichen parallel zu der Erstreckungsebene der Schmalseite erstreckt und einen Umlenkungsabschnitt aufweist, so dass das eingekoppelte Licht des Lichteinkoppelelementes nicht senkrecht zur Schmalseite, sondern seitlich zur Schmalseite unter Orientierung des Leuchtelementes in Richtung der Erstreckungsebene des Lichtleitkörpers eingekoppelt wird. Zum anderen weist die Schmalseite im Lichteinkoppelabschnitt mindestens eine Einbuchtung auf, die sich randseitig des Lichteinkoppelelementes anschließt und auf die Fläche des Lichteinkoppelelementes abgestimmt ist. Nach dieser Variante der Erfindung sind in dem Lichteinkoppelabschnitt brechende optische Flächen (Einbuchtungen) sowie totalreflektierende optische Flächen (Lichteinkoppelelement) angeordnet, durch die das seitlich eintretende Licht des Leuchtelementes in Richtung des flächigen Lichtleitkörpers umgelenkt wird.

Ausführungsbeispiele der Erfindung werden nachfolgend anhand der Zeichnungen näher erläutert.

Es zeigen:
- Figur 1: einen teilweisen Längsschnitt durch einen flä- chigen Lichtleitkörper nach einer bekannten Aus- führungsform,
- Figur 2: einen teilweisen Querschnitt durch den Licht- leitkörper gemäß Figur 1 nach der bekannten Aus- führungsform,
- Figur 3: eine Seitenansicht einer Beleuchtungsvorrichtung mit einem flächigen Lichtleitkörper nach einer ersten Ausführungsform, welche nicht Teil der Erfindung ist,
- Figur 4: eine teilweise Seitenansicht der Beleuchtungs- vorrichtung gemäß Figur 1 mit von einem Licht- einkoppelbereich einer Schmalseite des flächigen Lichtleitkörpers dargestellten eingekoppelten Lichtstrahlen,
- Figur 5: eine vergrößerte Darstellung eines Lichteinkop- pelabschnitts des flächigen Lichtleitkörpers nach der ersten Ausführungsform, welche nicht Teil der Erfindung ist,
- Figur 6: eine perspektivische Teilansicht einer Beleuch- tungsvorrichtung mit einem flächigen Lichtleit- körper nach einer zweiten Ausführungsform der Erfindung, welche nicht Teil der Erfindung ist,
- Figur 7: einen Querschnitt durch die Beleuchtungsvorrich- tung gemäß Figur 6,
- Figur 8: einen Längsschnitt durch eine Beleuchtungsvor- richtung mit einem flächigen Lichtleitkörper nach einer dritten Ausführungsform, welche nicht Teil der Erfindung ist, wobei exem- plarisch ein Verlauf der in einem Lichteinkop- pelabschnitt eingekoppelten Lichtstrahlen darge- stellt ist,
- Figur 9: eine vergrößerte Darstellung des Lichteinkop- pelabschnitts einer Schmalseite des Lichtleit- körpers gemäß Figur 8,
- Figur 10: eine perspektivische Seitenansicht einer Be- leuchtungsvorrichtung im Bereich einer Lichtein- koppelseite nach einer vierten Ausführungsform, wobei von einer Schmalseite des flächigen Licht- leitkörpers in einem Abstand zueinander el- lipsoidförmige Lichteinkoppelelemente abragen,
- Figur 11: eine perspektivische Teildarstellung der Schmal- seite des Lichtleitkörpers gemäß Figur 10,
- Figur 12: einen Querschnitt durch die Beleuchtungsvorrich- tung nach der vierten Ausführungsform in einem Lichteinkoppelabschnitt,
- Figur 13: einen Querschnitt durch eine Beleuchtungsvor- richtung nach einer fünften Ausführungsform mit einem bogenförmigen flächigen Lichtleitkörper in einem Lichteinkoppelabschnitt,
- Figur 14: eine vergrößerte Darstellung der Beleuchtungs- vorrichtung gemäß Figur 13,
- Figur 15: eine perspektivische Draufsicht auf die Beleuch- tungsvorrichtung nach der fünften Ausführungs- form,
- Figur 16: eine vergrößerte Darstellung eines Teilbereichs einer Lichteinkoppelseite der Beleuchtungsvor- richtung nach der fünften Ausführungsform,
- Figur 17: eine Draufsicht auf die Beleuchtungsvorrichtung nach der fünften Ausführungsform mit Darstellung von in unterschiedlichen Lichteinkoppelabschnit- ten eingekoppelten Lichtbündeln,
- Figur 18: einen Querschnitt durch eine Beleuchtungsvor- richtung nach einer sechsten Ausführungsform mit eingezeichneten Lichtstrahlen,
- Figur 19: eine vergrößerte Darstellung der Beleuchtungs- vorrichtung nach der sechsten Ausführungsform in einem Lichteinkoppelabschnitt,
- Figur 20: eine perspektivische Darstellung der Beleuch- tungsvorrichtung nach der sechsten Ausführungs- form,
- Figur 21: eine perspektivische Darstellung der Beleuch- tungsvorrichtung nach der sechsten Ausführungs- form seitlich von unten zu einer Schmalseite der Beleuchtungsvorrichtung, in der das Licht einge- koppelt wird und
- Figur 22: eine vergrößerte Draufsicht auf die Schmalseite der Beleuchtungsvorrichtung gemäß der sechsten Ausführungsform in einem Lichteinkoppelab- schnitt.

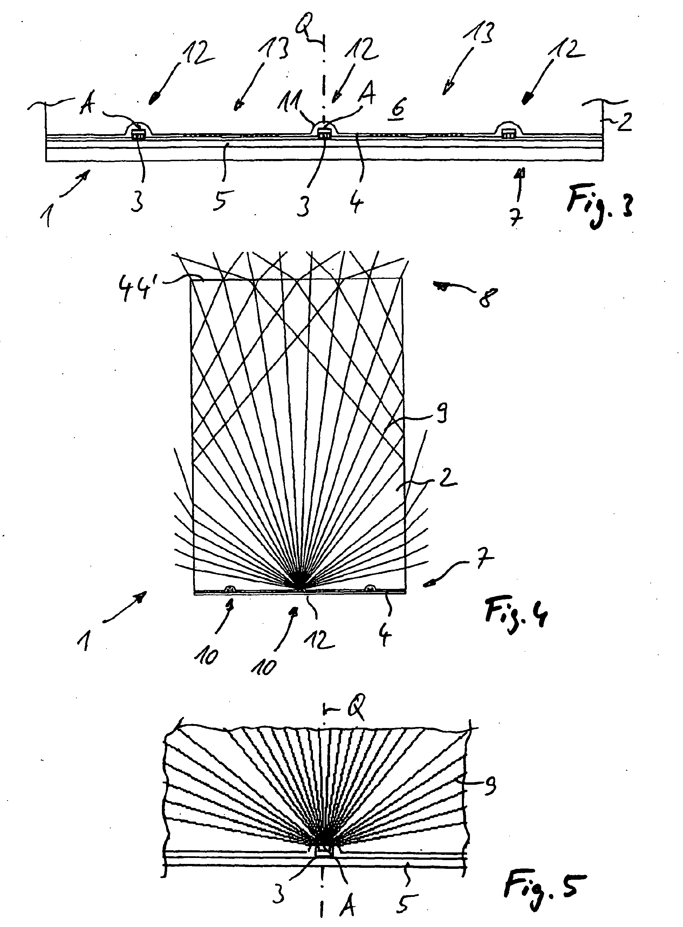

Eine erste Ausführungsform einer Beleuchtungsvorrichtung 1, welche nicht Teil der Erfindung ist, für Fahrzeuge ist in den Figuren 3 bis 5 dargestellt. Die Beleuchtungsvorrichtung 1 besteht im Wesentlichen aus einem flächigen Lichtleitkörper 2 und einer Mehrzahl von Leuchtelementen 3, die beabstandet zueinander und zu einer Schmalseite 4 des Lichtleitkörpers 2 angeordnet sind. Die Leuchtelemente 3 können als LED-Leuchtelemente (LED-Chips) ausgebildet sein, die auf einer gemeinsamen ebenen Leiterplatte 5 positioniert sind.

Der flächige Lichtleitkörper 2 ist plattenförmig ausgebildet und weist zwei großflächige Flachseiten 6, 6' auf, die parallel zueinander verlaufen. Vorzugsweise ist der Lichtleitkörper 2 im Querschnitt rechteckförmig ausgebildet, wobei sich an den Rändern der Flachseiten 6, 6' jeweils Schmalseiten anschließen. Die den Leuchtelementen 3 zugewandte Schmalseite 4 des Lichtleitkörpers 2 ist auf einer Lichteinkoppelseite 7 angeordnet, während eine gegenüberliegende Schmalseite 44' des Lichtleitkörpers 3 auf einer Lichtauskoppelseite 8 angeordnet ist. An den Flachseiten 6, 6' erfolgt eine Totalreflexion des eingekoppelten Lichtes 9, das vorzugsweise an der Lichtauskoppelseite 8 an die Umgebung ausgekoppelt wird. Gegebenenfalls kann eine Flachseite 6 mit einer optischen Struktur versehen sein zur flächigen Ausleuchtung in Richtung der gegenüberliegenden Flachseite 6'. Gleiche Bauteile bzw. Bauteilfunktionen der Ausführungsbeispiele sind mit den gleichen Bezugszeichen versehen.

Wie aus den Figuren 3 bis 5 deutlich wird, ist die Schmalseite 4 des Lichtleitkörpers 2 an Lichteinkoppelstellen 10 mit einer zylinderförmigen Ausnehmung 11 versehen und somit uneben ausgebildet. An der Lichteinkoppelstelle 10 weist die Schmalseite 4 somit einen Lichteinkoppelabschnitt 12 auf, wobei benachbarte Lichteinkoppelabschnitte 12 über ebene Zwischenabschnitte 13 der Schmalseite 4 verbunden sind. Die zylinderförmige Ausnehmung 11 weist eine Mittelachse A auf, die senkrecht zu den Flachseiten 6, 6' verläuft. Im Bereich der Mittelachse A ist das LED-Leuchtelement 3 angeordnet, so dass die unter einem relativ großen spitzen Winkel zu einer Querebene Q in den Lichtleitkörper 2 eintretenden Lichtstrahlen 9 quasi ohne Richtungsänderung in den Lichtleitkörper 2 eintreten. Vorteilhaft kann hierdurch eine den Lichteinkoppelabschnitt 12 abdeckende Blende verkleinert ausgebildet sein. Vorzugsweise weist die zylinderförmige Ausnehmung 11 eine halbzylinderförmige Einkoppelfläche auf mit einem Durchmesser D, der größer ist als die Quererstreckung der Leuchtelemente 3. Der Durchmesser D der halbzylinderförmigen Einkoppelfläche 11 kann in einem Bereich zwischen 1 mm und 4mm liegen.

Im Vergleich zu der bekannten Ausführungsform einer Beleuchtungsvorrichtung 1' gemäß den Figuren 1 und 2 mit einer durchgehend ebenen Schmalseite 4' kann somit eine dem Lichtleitkörper 2 vorgelagerte Blende zur Abdeckung des Lichteinkoppelbereiches kleiner ausfallen.

Nach einer nicht dargestellten Ausführungsform kann die Ausnehmung 11 auch als eine frei geformte Einkoppelfläche ausgebildet sein, so dass eine an die Form der Leiterplatte 5 angepasste Lichteinkopplung ermöglicht wird.

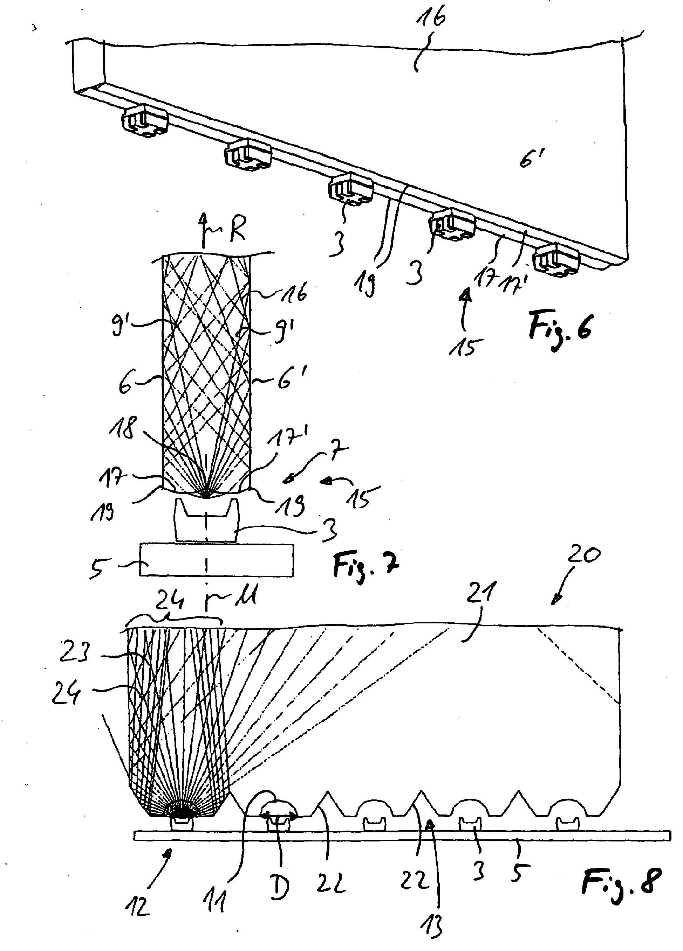

Nach einer zweiten Ausführungsform einer Beleuchtungsvorrichtung 15 welche nicht Teil der Erfindung ist, gemäß den Figuren 6 und 7 kann ein plattenförmiger Lichtleitkörper 16 vorgesehen sein, der an der Lichteinkoppelseite 7 im Unterschied zu der bekannten Beleuchtungsvorrichtung 1' und der Beleuchtungsvorrichtung 1 nach der ersten Ausführungsform der Erfindung zwei in Längserstreckung der Schmalseite 4 verlaufende zylinderförmige Ausbuchtungen 17, 17' aufweist. Die zylinderförmigen Ausbuchtungen 17, 17' sind durchgehend angeordnet, so dass die Schmalseite 4 über die gesamte Längserstreckung uneben ausgebildet ist. Nach einer nicht dargestellten Ausführungsform der Erfindung können die zylinderförmigen Ausbuchtungen 17, 17' auch lediglich an den Lichteinkoppelstellen 10 angeordnet sein, an denen die Leuchtelemente 3 vorzugsweise auf einer gemeinsamen Leiterplatte positioniert sind. Die zwei zylinderförmigen Ausbuchtungen 17, 17' laufen auf einer zueinander gekehrten Randseite unter einem stumpfen Öffnungswinkel zu einer Senkgeraden 18 zusammen, so dass die zylinderförmigen Ausbuchtungen 17, 17' unstetig zusammenlaufen. Die Senkgerade 18 bildet eine Vertiefung der Schmalseite 4 in Längsrichtung derselben und ermöglicht im Zusammenwirken mit der Krümmung der zylinderförmigen Ausbuchtungen 17, 17', dass ein in axialer Richtung R abgestrahlter Lichtanteil 9' der Leuchtelemente 3 zu den Flachseiten 6, 6' des Lichtleitkörpers 16 gebrochen wird. Vorteilhaft kann auch dieser Lichtanteil 9' mittels Totalreflexion an den Flachseiten 6, 6' genutzt werden und läuft nicht ungenutzt durch den Lichtleitkörper 2, wie es nach der bekannten Beleuchtungsvorrichtung 1' gemäß Figur 2 der Fall wäre. Durch die ebene Ausgestaltung der Schmalseite 4' dort wird der in axialer Richtung R abgestrahlte Lichtanteil 9' im Wesentlichen in axialer Richtung R durch den Lichtleitkörper 2' geführt.

Wie insbesondere aus Figur 7 ersichtlich ist, ist die Senkgerade 18 in einer Längsmittelebene M des Lichtleitkörpers 16 und erstreckt sich parallel zu Randkanten 19 der Schmalseite 4.

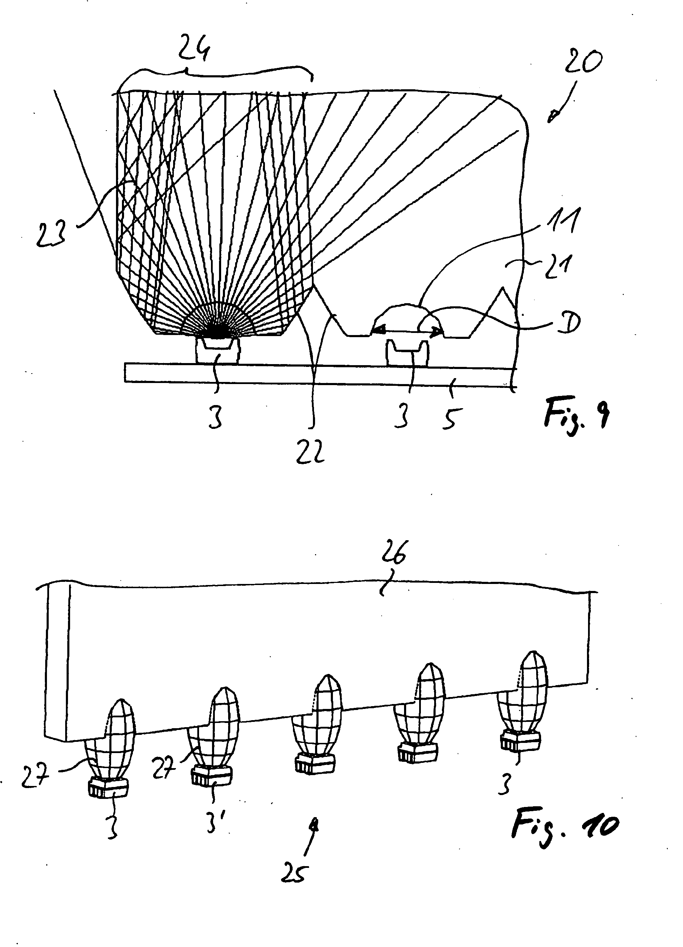

Nach einer dritten Ausführungsform einer Beleuchtungsvorrichtung 20, welche nicht Teil der Erfindung ist, gemäß den Figuren 8 und 9 ist im Unterschied zu der ersten Ausführungsform der Erfindung ein Lichtleitkörper 21 vorgesehen, der in dem Zwischenabschnitt 13 der Schmalseite 4 jeweils parabelförmige Einbuchtungen 22 aufweist. Im Zusammenwirken mit der zylinderförmigen Ausnehmung 11 in dem Lichteinkoppelabschnitt 12 der Schmalseite 4 wird eine stärkere Ausrichtung des eingekoppelten Lichtes 23 ermöglicht, wobei an der Lichtauskoppelseite 8 Bereiche/Zonen mit einer erhöhten Leuchtdichte geschaffen werden. Beispielsweise können dies helle Streifen sein, die optisch hervorgehoben gegenüber einer Grundhelligkeit des Lichtleitkörpers 21 sind. Somit kann das Licht 23 ein konvergentes Lichtband 24 bilden, das in einem vorgegebenen Winkel parallel zu den Flachseiten 6, 6' innerhalb des Lichtleitkörpers 21 hindurchgeleitet wird.

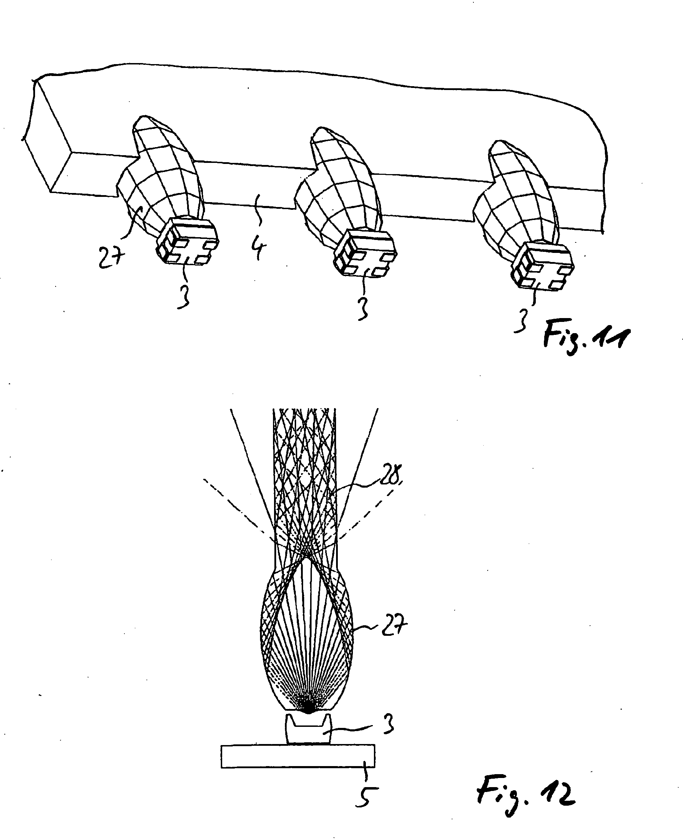

Nach einer Ausführungsform einer Beleuchtungsvorrichtung 25 gemäß den Figuren 10 bis 12 ist ein Lichtleitkörper 26 vorgesehen, der an den Lichteinkoppelstellen 10 jeweils ein ellipsoidförmiges Lichteinkoppelelement 27 aufweist, das senkrecht von einer Erstreckungsebene der Schmalseite 4 von derselben abragt. Vorteilhaft kann hierdurch das von den Leuchtelementen 3 abgestrahlte Licht 28 effizient erfasst und in den Lichtleitkörper 26 eingekoppelt werden.

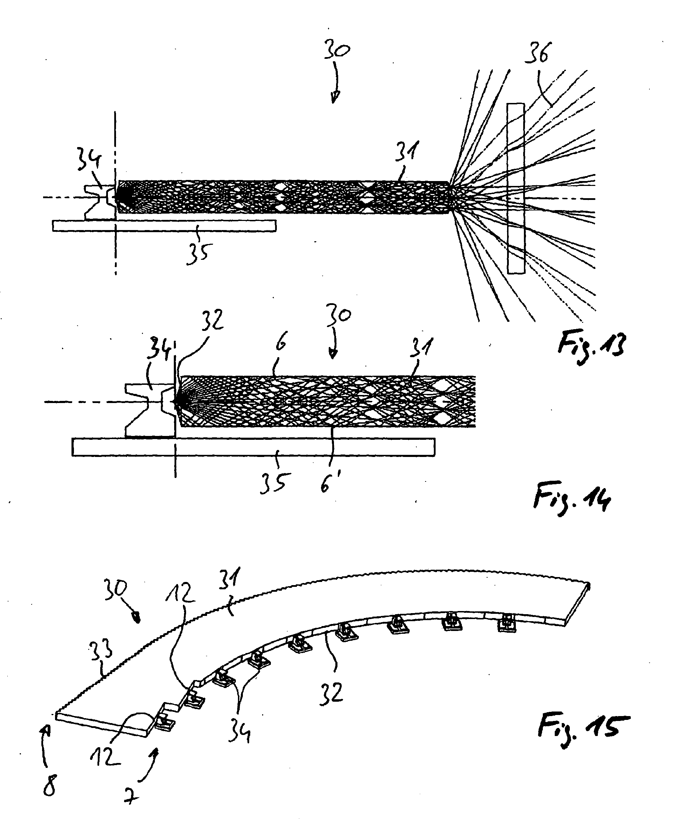

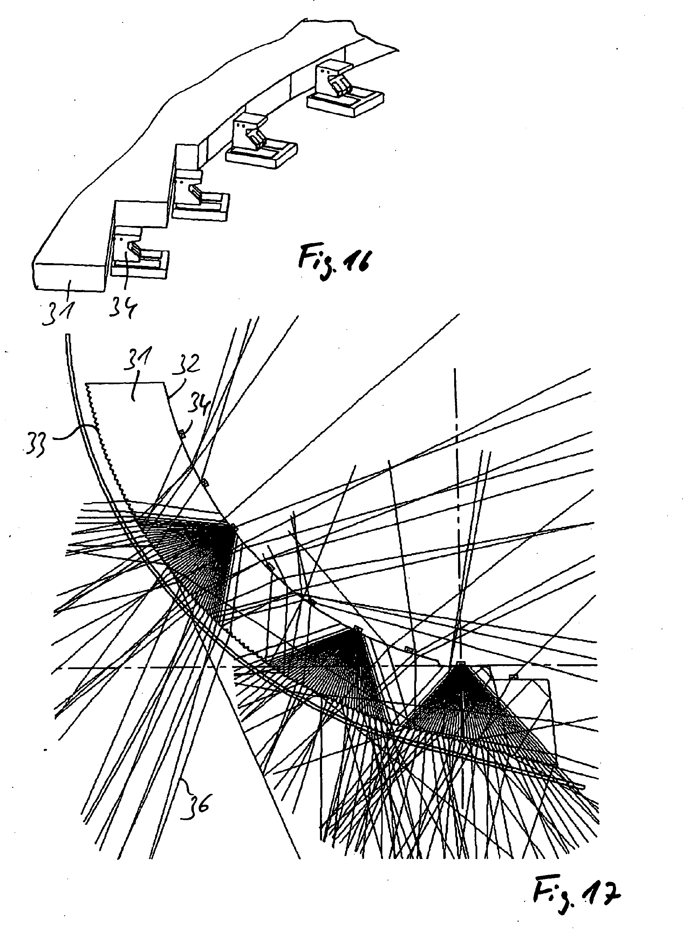

Nach einer fünften Ausführungsform einer Beleuchtungsvorrichtung 30, welche nicht Teil der Erfindung ist, gemäß den Figuren 13 bis 17 ist ein bogenförmiger flacher Lichtleitkörper 31 vorgesehen, wobei eine Schmalseite 32 an der Lichteinkoppelseite 7 und eine Schmalseite 33 an der Lichtauskoppelseite 8 des Lichtleitkörpers 31 jeweils bogenförmig verlaufen. Als Leuchtelemente sind seitlich abstrahlende Leuchtelemente 34 vorgesehen, die auf einer parallel zu Flachseiten 6, 6' des Lichtleitkörpers 31 verlaufenden Leiterplatte 35 angeordnet sind. Die Schmalseite 32 der Lichteinkoppelseite 7 ist stufenförmig ausgebildet, wobei das von den Leuchtdioden 34 abgestrahlte Licht 36 auf einen im Wesentlichen ebenen Lichteinkoppelabschnitt 12 der Schmalseite 32 auftrifft. Vorteilhaft ist die Beleuchtungsvorrichtung 30 Platz sparend angeordnet, weil die Leiterplatte 35 parallel zu dem flachen Lichtleitkörper 31 angeordnet sein kann.

Nach einer nicht dargestellten alternativen Ausführungsform können auch herkömmliche LED-Leuchtelemente 3 der Schmalseite 32 zugeordnet sein, wobei die Leiterplatte 35 der LED's 3 ebenfalls stufenförmig und parallel zu der Schmalseite 32 angeordnet sind. Beispielsweise kann die Leiterplatte auch flexibel ausgebildet sein.

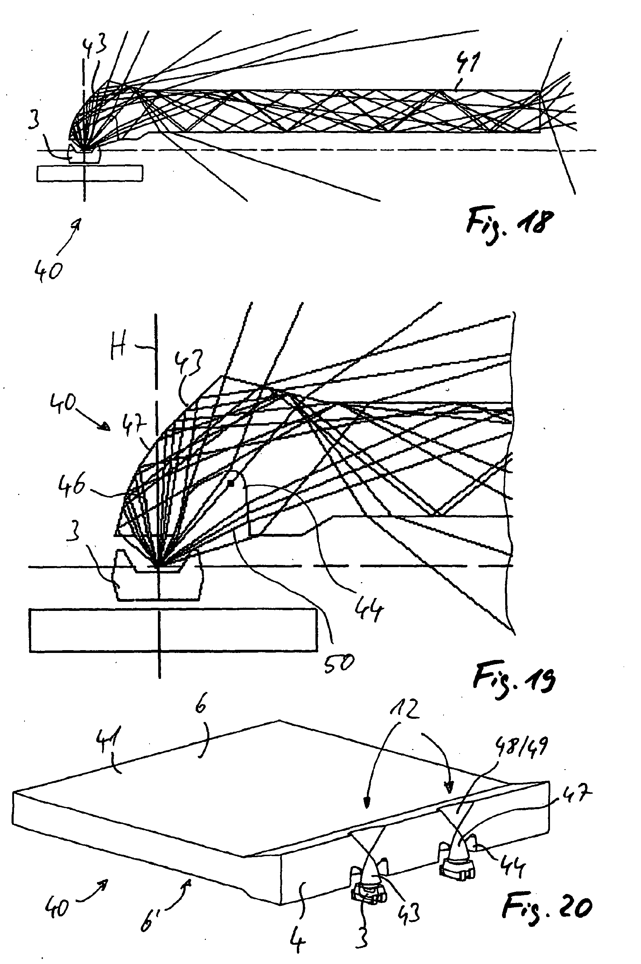

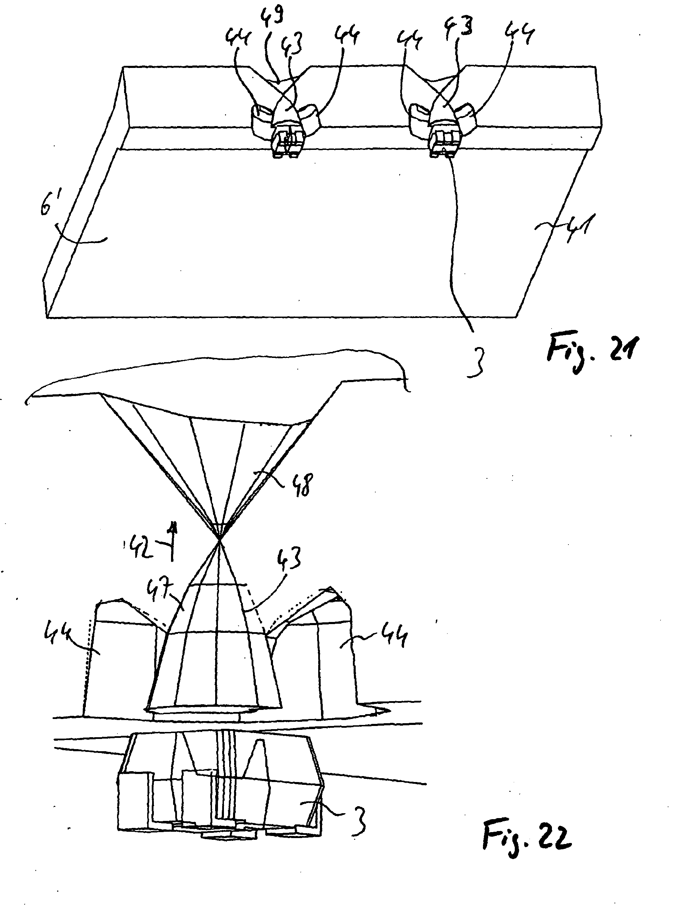

Nach einer sechsten Ausführungsform einer Beleuchtungsvorrichtung 40, welche nicht Teil der Erfindung ist, gemäß den Figuren 18 bis 22 ist ein flacher Lichtleitkörper 41 vorgesehen, der an der Schmalseite 4 im Bereich der Lichteinkoppelabschnitte 12 ein zu den Leuchtelementen 3 ausgerichtetes konusförmiges und sich in Lichtführungsrichtung 42 verjüngendes Lichteinkoppelelement 43 einerseits und sich an gegenüberliegenden Seiten an das Lichteinkoppelelement 43 anschließende Einbuchtungen 44 andererseits aufweist. Das Lichteinkoppelelement 43 und die Einbuchtungen 44 sind senkrecht zur Erstreckungsebene des Lichtleitkörpers 41 hin zu einem seitlich angeordneten Leuchtelement 3 ausgerichtet. Die Leuchtelemente 3 können ebenfalls auf einer gemeinsamen Leiterplatte, die parallel zu Flachseiten 6, 6' des Lichtleitkörpers 41 verlaufen, angeordnet sein. Die Lichteinkoppelelemente 43 und die Einbuchtungen 44 ermöglichen eine verbesserte Lichteinkopplung von Leuchtelementen 3, deren axiale Hauptabstrahlrichtung H nicht senkrecht zur Schmalseite 4, sondern annähernd parallel oder in einem kleinen Winkel zur Schmalseite 4 hin verläuft. In dem seitlich von der Schmalseite 4 abragenden Lichteinkoppelelement 43 erfolgt eine Totalreflexion des eingekoppelten ersten Lichtanteils 46 in Richtung der Schmalseite 4. Hierzu weist das Lichteinkoppelelement 43 einen umlaufenden Konusabschnitt 47 und einen sich in Lichtführungsrichtung 42 anschließenden Umlenkabschnitt 48 auf, der unter Bildung einer Abflachung 49 in die Schmalseite 4 übergeht. Zum anderen wird ein zweiter Lichtanteil 50 des von den Leuchtelementen 3 emittierten Lichtes lediglich an den Einuchtungen 44 gebrochen und unter Totalreflexion an den Flachseiten 6, 6' des Lichtleitkörpers 41 in demselben weitergeleitet. Durch die Kombination aus einem den ersten Lichtanteil 46 totalreflektierenden Lichteinkoppelelement 43 und lediglich einen zweiten Lichtanteil 50 brechender Einbuchtungen 44 kann eine verbesserte Lichteinkopplung von seitlich angeordneten LED's 45 erzielt werden.

Es versteht sich, dass die in den Ausführungsbeispielen beschriebenen varianten der Erfindungen auch miteinander kombiniert werden können. Beispielsweise können die zylinderförmigen Ausbuchtungen 17, 17' gemäß der zweiten Ausführungsform mit der zylindrischen Ausnehmung 11 an der Lichteinkoppelstelle 10 gemäß erster Ausführungsform kombiniert werden.

## Patentansprüche

1. Beleuchtungsvorrichtung für Fahrzeuge mit einem flächigen Lichtleitkörper (2) enthaltend
- zwei gegenüberliegende Flachseiten (6, 6'), an denen durch Totalreflexion Licht von einer Lichteinkoppelseite (7) des Lichtleitkörpers (2) zu einer Lichtauskoppelseite (8) desselben übertragen wird,
- eine an der Lichteinkoppelseite (7) angeordnete Schmalseite (4), der eine Mehrzahl von entlang der Schmalseite (4) beabstandet zueinander angeordneter Leuchtelemente (3) zugeordnet ist zur Einkopplung des Lichtes in den Lichtleitkörper (2), wobei die Schmalseite (4) in mindestens einer senkrecht zu den Flachseiten (6, 6') verlaufenden Erstreckungsebene verläuft, wobei die Schmalseite (4) zumindest in einem eine Lichteinkoppelstelle (10) bildenden Lichteinkoppelabschnitt (12) derselben uneben ausgebildet ist, **dadurch gekennzeichnet, dass** der Lichteinkoppelabschnitt (12) durch ein an die Schmalseite (4) angeformtes ellipsoidförmiges Lichteinkoppelelement (27) ausgebildet ist, das senkrecht von der Erstreckungsebene der Schmalseite (4) von derselben abragt.

2. Beleuchtungsvorrichtung nach Anspruch 1, **dadurch gekennzeichnet, dass** der Lichteinkoppelabschnitt (12) als eine Ausnehmung mit einer frei geformten Einkoppelfläche oder als eine zylinderförmige Ausnehmung (11) ausgebildet ist, wobei sich eine Mittelachse A der zylinderförmigen Ausnehmung (11) senkrecht zu mindestens einer Flachseite (6, 6') erstreckt und wobei die Leuchtelemente (3) zumindest bereichsweise in der zylinderförmigen Ausnehmung (11) angeordnet sind.

3. Beleuchtungsvorrichtung nach Anspruch 2, **dadurch gekennzeichnet, dass** die zylinderförmige Ausnehmung (11) eine halbzylindrische Einkoppelfläche mit einem Durchmesser (D) aufweist, der größer ist als die Quererstreckung der jeweiligen Leuchtelemente (3).

4. Beleuchtungsvorrichtung nach Anspruch 3, **dadurch gekennzeichnet, dass** der Durchmesser (D) der halbzylindrischen Einkoppelfläche (11) in einem Bereich zwischen 1 mm und 4 mm liegt.

5. Beleuchtungsvorrichtung nach einem der Ansprüche 1 bis 4, **dadurch gekennzeichnet, dass** der Lichteinkoppelabschnitt (12) mindestens zwei zylinderförmige Ausbuchtungen (17, 17') aufweist, die sich jeweils in Längserstreckung der Schmalseite (4) erstrecken und die auf einer zueinander gekehrten Randseite unter einem Winkel zu einer Senkgeraden (18) zusammenlaufen, derart, dass das von dem Leuchtelement (3) in axialer Richtung (R) ausgesandte Licht zu den Flachseiten (6, 6') hin gebrochen wird.

6. Beleuchtungsvorrichtung nach Anspruch 5, **dadurch gekennzeichnet, dass** die Senkgerade (18) in einer Mittelebene (M) des Lichtleitkörpers (16) und parallel zu Randkanten (19) der Schmalseite (4) verläuft.

7. Beleuchtungsvorrichtung nach einem der Ansprüche 1 bis 6, **dadurch gekennzeichnet, dass** in Längserstreckung der Schmalseite (4) zwischen den Lichteinkoppelabschnitten (12) Zwischenabschnitte (13) vorgesehen sind, die eben oder stufenförmig oder mit parabelförmigen Einbuchtungen (22) versehen ausgebildet sind.

8. Beleuchtungsvorrichtung nach einem der Ansprüche 1 bis 7, **dadurch gekennzeichnet, dass** in dem Lichteinkoppelabschnitt (12) durch ein an der Schmalseite (4) angeformtes und von derselben sich in Lichtführungsrichtung (42) verjüngendes Lichteinkoppelelement (43) angeordnet ist zur Einkopplung eines ersten Lichtanteils (46) des Leuchtelementes (3), das seitlich von der Schmalseite (4) parallel zur Erstreckungsebene der Schmalseite (4) abragt.

9. Beleuchtungsvorrichtung nach Anspruch 8, **dadurch gekennzeichnet, dass** sich neben dem sich verjüngenden Lichteinkoppelelement (43) eine Einbuchtung (44) vorgesehen ist zur Einkopplung eines zweiten Lichtanteils (50) des Leuchtelementes (3) an der Lichteinkoppelstelle (10).

10. Beleuchtungsvorrichtung nach einem der Ansprüche 1 bis 9, **dadurch gekennzeichnet, dass** die Flachseite (6, 6') mit einer optischen Struktur versehen ist, derart, dass Licht umgelenkt wird in Richtung der gegenüberliegenden Flachseite (6, 6') zur flächigen Ausleuchtung des Lichtleitkörpers (2).

## Claims

1. Illumination device for vehicles having a flat type light conducting body (2) comprising two opposing flat sides (6, 6') at which light is transmitted from a light input side (7) of said body (2) to a light output side (8) thereof by total reflection, and a narrow side (4) at the light input side (7) to which narrow side (4) a plurality of light elements (3) are arranged in a spaced relation for light input into the light conducting body (2) wherein said narrow side (4) extends in at least one extension plane which is perpendicular to said flat sides (6, 6') and wherein said narrow side (4) is uneven at least within a light input section (12) that providies a light input spot (10), **characterized in that** the light input section (12) consists of an ellipsoidal light input element (27) which is formed integral with the narrow side (4) which protrudes perpendicular from said narrow side (4) in the extension plane thereof.

2. Illumination device for vehicles according to Claim 1, **characterized in that** the light input section (12) is a recess (11) having a freely formed input surface or a cylindrical shape wherein a centerline A of said cylindrical recess (11) extends perpendicular to at least one of the flat sides (6, 6') and wherein light elements (3) are disposed inside said cylindrical recess (11) in defined areas at least.

3. Illumination device according to Claim 2, **characterized in that** the cylindrical recess (11) has a semi-cylindrical input surface of a diameter (D) which is larger than the transversal extension of the respective light elements (3).

4. Illumination device for vehicles according to Claim 3, **characterized in that** said diameter (D) of a semi-cylindrical input surface (11) is in the range from 2 mm to 4 mm.

5. Illumination device according to any of the preceding Claims 1 to 4, **characterized in that** the light input section (12) has at least two cylindrical bulges (17, 17') which each extend along the longitudinal extension of the narrow side (4) and which converge into a vertical straight line (18) under an angle such that light emitted from a light element (39) in an axial direction (R) gets refracted toward the flat sides (6, 6').

6. Illumination device according to Claim 5, **characterized in that** the vertical straight line (18) extends in a central plane (M) of the light conducting body (16) and parallel with marginal edges (19) of narrow side (4).

7. Illumination device according to any of the preceding Claims 1 to 6, **characterized in that** there are intermediate sections (13) provided between the light input section (12) in longitudinal extension of the narrow side (4) which are even or stepped or provided with parabolic dents (22).

8. Illumination device according to any of the preceding Claims 1 to 7, **characterized in that** in the light input section (12) there is a light input element (43) provided which is formed integral with the narrow side (4) and which tapers in a light transmitting direction (42) and which serves for inputting a first proportion (46) of the light from element (3) that protrudes laterally from the narrow side (4) in parallel with the extension plane of said narrow side (4).

9. Illumination device according to Claim 8, **characterized in that** an indentation (44) is provided aside the tapering light input element (43) for inputting a second proportion (50) of the light from element (3) at the light input spot (10).

10. Illumination device according to any of the preceding Claims 1 to 9, **characterized in that** the flat side (6, 6') is provided with an optical texture such that light gets deflected toward the opposite flat side (6, 6') for full-face illumination of the light conducting body (2).

## Revendications

1. Appareil d'éclairage pour véhicules automobiles, avec un corps conducteur de lumière (2) plan, comprenant:
- deux côtés plats (6, 6') opposés, sur lesquels la lumière est transmise, par réflexion totale, d'une surface de couplage de lumière (7) du corps conducteur de lumière (2) à une surface de découplage de lumière (8) de celui-ci,
- un côté étroit (4), associé à la surface de couplage de lumière (7), auquel sont associés plusieurs éléments lumineux (3), qui sont disposés, à distance les uns des autres, le long du côté étroit (4), pour coupler la lumière dans le corps conducteur de lumière (2), sachant que le côté étroit (4) s'étend au moins sur un plan, qui est perpendiculaire aux côtés plats (6, 6'), le côté étroit (4) n'étant pas de conception plane, au moins dans un secteur de couplage de lumière (12) de celui-ci, qui forme un point de couplage de lumière (10), **caractérisé en ce que** le secteur de couplage de lumière (12) consiste en un élément de couplage de lumière (27) ellipsoïde, qui, formé à partir du côté étroit (4), est en saillie dudit côté étroit (4), perpendiculairement au plan dans lequel celui-ci s'étend.

2. Appareil d'éclairage selon la revendication 1, **caractérisé en ce que** le secteur de couplage de lumière (12) est réalisé sous la forme d'un évidement dotée d'une surface de couplage de forme libre ou d'un évidement cylindrique (11), sachant qu'un axe central (A) de l'évidement cylindrique (11) s'étend perpendiculairement à au moins un côté plat (6, 6'), et les éléments lumineux (3) étant disposés, dans l'évidement cylindrique (11), aux moins par secteurs.

3. Appareil d'éclairage selon la revendication 2, **caractérisé en ce que** l'évidement cylindrique (11) présente une surface de couplage de lumière semi-cylindrique, dont le diamètre (D) est plus grand que la dimension transversale de l'élément lumineux (3) respectif.

4. Appareil d'éclairage selon la revendication 3, **caractérisé en ce que** le diamètre (D) de la surface de couplage de lumière semi-cylindrique (11) est situé dans une plage de 1 mm à 4 mm.

5. Appareil d'éclairage selon l'une des revendications 1 à 4, **caractérisé en ce que** le secteur de couplage de lumière (12) présente au moins deux renflements (17, 17'), qui s'étendent chacun dans le sens longitudinal du côté étroit (4) et qui, sur leurs bords qui se font face, convergent sur une dépression linéaire (18) en formant un angle, de sorte que la lumière émise dans la direction axiale (R) par l'élément lumineux (3) est réfractée en direction des côtés plats (6, 6').

6. Appareil d'éclairage selon la revendication 5, **caractérisé en ce que** la dépression linéaire (18) s'étend sur un plan central (M) du corps conducteur de lumière (16) et parallèlement aux bords marginaux (19) du côté étroit (4).

7. Appareil d'éclairage selon l'une des revendications 1 à 6, **caractérisé en ce que**, dans le sens longitudinal du côté étroit (4), entre les secteurs de couplage de lumière (12), sont prévus des secteurs intermédiaires (13) plats ou étagés ou pourvus de renflements paraboloïdes (22).

8. Appareil d'éclairage selon l'une des revendications 1 à 7, **caractérisé en ce que**, dans le secteur de couplage de lumière (12), est agencé, pour le couplage d'une première fraction de la lumière (46) de d'éléments lumineux (3), un élément de couplage de lumière (43), qui, formé sur le côté étroit (4) et s'effilant à partir de celui-ci, dans la direction de guidage de la lumière, est en saillie latérale du côté étroit (4), parallèlement au plan, dans lequel s'étend ledit côté étroit (4).

9. Appareil d'éclairage selon la revendication 8, **caractérisé en ce que**, pour le couplage d'une deuxième fraction de lumière (50) de l'éléments lumineux (3) au point de couplage de lumière (10)), un renflement (44) est prévu à côté de l'élément de couplage de lumière effilé (43).

10. Appareil d'éclairage selon l'une des revendications 1 à 9, **caractérisé en ce que** le côté plat (6, 6') est doté d'une structure optique, de sorte que de la lumière soit déviée dans la direction du côté plat (6, 6') opposé, pour éclairer en nappe le corps conducteur de lumière (2).
